# EUROPEAN PATENT SPECIFICATION

(11) **EP 3 254 460 B1**
(45) Date of publication and mention of the grant of the patent: **30.06.2021**
(21) Application number: 16803619.2
(22) Date of filing: 10.05.2016
(51) Int. Cl.: H04N 5/44, H04N 5/455, H04N 21/2383, H04N 21/426, H04N 21/438, H04N 21/61

(54) **BROADCAST SIGNAL RECEIVING APPARATUS AND CONTROLLING METHOD THEREOF**
RUNDFUNKSIGNALEMPFANGSVORRICHTUNG UND STEUERUNGSVERFAHREN DAFÜR
APPAREIL DE RÉCEPTION DE SIGNAL DE DIFFUSION, ET SON PROCÉDÉ DE COMMANDE

(30) Priority: 03.06.2015 KR 20150078809
(43) Date of publication of application: 13.12.2017
(73) Proprietor: Samsung Electronics Co., Ltd., Suwon-si, Gyeonggi-do 16677 (KR)
(72) Inventor: SHIN, Hyun-jong, Suwon-si Gyeonggi-do 16697 (KR)
(74) Representative: Walaski, Jan Filip
(86) International application number: PCT/KR2016/004840
(87) International publication number: WO 2016/195264

(56) References cited:
- WO-A1-2008/091255
- JP-A- H0 946 614
- KR-A- 20050 010 096
- KR-A- 20130 073 576
- US-A1- 2007 042 732
- US-A1- 2008 109 854
- US-A1- 2013 051 481
- EUTA: "Digital Satellite Equipment Control (DiSEqC(TM) ) BUS FUNCTIONAL SPECIFICATION", 19980225 , no. Version 4.2 25 February 1998 (1998-02-25), pages 1-28, XP007921672, Retrieved from the Internet: URL:http://www.eutelsat.com/satellites/pdf /Diseqc/Reference%20docs/bus_spec.pdf

## Description

### Technical Field

Apparatuses and methods consistent with the exemplary embodiments relate to a broadcast signal receiving apparatus, a broadcast signal receiving system and a controlling method thereof, and more particularly to a broadcast signal receiving apparatus which receives a broadcast signal from a satellite, a broadcast signal receiving system and a controlling method thereof.

### Background Art

A broadcast signal receiving apparatus receives satellite, cable and terrestrial broadcast signals and process them to be displayed as images. The broadcast signal receiving apparatus may display the processed broadcast signal as an image on its own display panel or may output the processed broadcast signal to another display apparatus having a panel so that the broadcast signal can be displayed as an image on the panel. As an example of the former, there is a television that is also called a display apparatus. As an example of the latter, there is a set-top box.

The broadcast signal receiving apparatus may receive a broadcast signal in various ways. For example, the broadcast signal receiving apparatus may receive a broadcast signal through a cable directly connected to broadcasting equipment of a broadcasting station, or may wirelessly receive a broadcast signal in the form of a radio frequency (RF) signal through an RF antenna to which the broadcast signal receiving apparatus is connected by a wire. Further, the broadcast signal receiving apparatus may receive a broadcast signal through a satellite antenna.

The satellite antenna wirelessly receives a broadcast signal from a satellite located on a geostationary orbit of the Earth, and such a broadcast signal is transmitted to the broadcast signal receiving apparatus by a wire through a terrestrial relay. Then, the broadcast signal receiving apparatus processes the broadcast signal received from the satellite antenna so as to be displayed as an image.

As international standards, digital satellite equipment control (DiSEqC) specifies that one broadcast signal receiving apparatus selectively receives a broadcast signal from a plurality of satellites. The terrestrial relay may include a low noise block (LNB) down converter provided in the satellite antenna, and a DiSEqC switch for selecting a satellite.

The broadcast signal receiving apparatus outputs a command including channel information to the terrestrial relay in order to receive a broadcast signal. Typically, the broadcast signal receiving apparatus is separately provided with an LNB integrated circuit (IC) for controlling an LNB voltage. The LNB IC changes the LNB voltage in accordance with selected channels sections, and then a DiSEqC command having the channel information received through a tuner IC is output to the terrestrial relay within a set time.

WO 2008091255 and US 2013051481 disclose satellite broadcast signal receiving apparatus.

However, timing between the change of the LNB voltage and the output of the DiSEqC command is strictly set, but the timing is often unsatisfied in the existing broadcast signal receiving apparatus where the LNB IC and the tuner IC are independent of each other and controlled respectively.

In particular, it is more difficult to strictly observe the timing since the size of a printed circuit board (PCB) mounted to the broadcast signal receiving apparatus has become smaller and an internal bus is shared for common use.

According to an aspect of the invention, there is provided a broadcast signal receiving apparatus according to claim 1.

The demodulator may change the voltage level of the command in response to the control signal, and superimpose the channel information to the command having the changed voltage level. Thus, it is possible to decrease a risk of a tuning fail due to error in the timing control, and reduce visual inconvenience of a user.

The demodulator may superimpose the channel information to the command at timing when a predetermined time elapses after changing the voltage level of the command. Thus, it is possible to more stably provide a viewing service while satisfying the standards.

The relay may include a switch box configured to control selection of a satellite corresponding to the selected channel based on the voltage level of the command. Thus, it is possible to selectively receive a broadcast signal corresponding to a desired channel between horizontal polarization and vertical polarization.

The relay may further include a low noise block (LNB) provided in a satellite antenna, and the LNB may down-convert a broadcast signal of a predetermined band received from a satellite to a usable frequency of the broadcast signal receiving apparatus based on information about the selected channel included in the command. Thus, the broadcast signal receiving apparatus receives and provides a broadcast signal of a desired channel so that a user can view it.

The command may include a tone burst signal and tone signals sequentially output with time gaps from the tone burst signal based on a predetermined communication protocol, and may be controlled to receive a broadcast signal having a frequency band corresponding to one of a low band and a high band in accordance with the tone signals. Thus, it is possible to exchange a command between the relay and the broadcast signal receiving apparatus supporting the DiSEqC protocol.

The switch box may include a channel router configured to have a plurality of ports connectable with a plurality of broadcast signal receiving apparatuses by a single cable, and receive the command from the plurality of broadcast signal receiving apparatuses. Thus, it is possible to transmit a command to even a SatCR that uses a single cable to receive the command from the plurality of broadcast signal receiving apparatuses.

The demodulator may receive the control signal from the processor through an I2C interface, and the command may include a digital satellite equipment control (DiSEqC) command based on a DiSEqC protocol. Thus, the present inventive concept is applicable to a broadcast signal receiving apparatus supporting I2C and a DiSEqC interface.

The broadcast signal receiving apparatus may further comprise a radio frequency (RF) tuner configured to receive a broadcast signal through the relay and be tuned to the selected channel, and the demodulator may receive a broadcast signal output from the RF tuner and outputs a demodulated transport stream. Thus, it is possible to add an LNB voltage setting function to the demodulator for demodulating a signal.

The foregoing and/or other aspects of the present invention are achieved by providing a method of controlling a broadcast signal receiving apparatus for receiving a satellite broadcast signal, the method including: outputting a control signal from at least one processor to a demodulator in response to channel selection for receiving a broadcast signal; and outputting a command, which has a voltage level corresponding to the selected channel and includes channel information about the selected channel, to a relay in response to the control signal output from the processor, the relay selectively receiving a broadcast signal in in accordance with a voltage level of the command. Thus, it is easier to control timing since the LNB voltage is set and the DiSEqC command is output by the single demodulator.

The outputting the command may include changing the voltage level of the command in response to the control signal, and superimposing the channel information to the command having the changed voltage level. Thus, it is possible to decrease a risk of a tuning fail due to error in the timing control, and reduce visual inconvenience of a user.

The outputting the command may include superimposing the channel information to the command at timing when a predetermined time elapses after changing the voltage level of the command. Thus, it is possible to more stably provide a viewing service while satisfying the standards.

The method may further include controlling selection of a satellite corresponding to the channel selected by a switch box of the relay, based on the voltage level of the command. Thus, it is possible to selectively receive a broadcast signal corresponding to a desired channel between horizontal polarization and vertical polarization.

The method may further include, by a low noise block (LNB) of the relay, down-converting a broadcast signal of a predetermined band received from a satellite to a usable frequency of the broadcast signal receiving apparatus based on information about the selected channel included in the command. Thus, the broadcast signal receiving apparatus receives and provides a broadcast signal of a desired channel so that a user can view it.

The command may include a tone burst signal and tone signals sequentially output with time gaps from the tone burst signal based on a predetermined communication protocol, and the method may further include, by the LNB, receiving a broadcast signal having a frequency band corresponding to one of a low band and a high band in accordance with the tone signals. Thus, it is possible to exchange a command between the relay and the broadcast signal receiving apparatus supporting the DiSEqC protocol.

The outputting the control signal, the demodulator may receive the control signal from the processor through an I2C interface, and the command may include a digital satellite equipment control (DiSEqC) command based on a DiSEqC protocol. Thus, the present inventive concept is applicable to a broadcast signal receiving apparatus supporting I2C and a DiSEqC interface.

The method may further include receiving a broadcast signal through the relay and being tuned to the selected channel; and demodulating the received broadcast signal to be output as a transport stream. Thus, it is possible to add an LNB voltage setting function to the demodulator for demodulating a signal.

The foregoing and/or other aspects of the present invention are achieved by providing a satellite broadcasting system including a broadcast signal receiving apparatus for receiving a satellite broadcast signal, and a relay for relaying a broadcast signal from a satellite to the broadcast signal receiving apparatus, the relay including: a low noise block (LNB) configured to be provided in a satellite antenna; and a switch box configured to selectively receive a broadcast signal corresponding to a voltage level of a signal, and the broadcast signal receiving apparatus including: a demodulator configured to demodulate a satellite broadcast signal received through the relay; and at least one processor configured to output a control signal to the demodulator in response to channel selection for the broadcast signal, the demodulator outputting a command, which has a voltage level corresponding to the selected channel and includes channel information about the selected channel, to the relay in response to the control signal output from the processor, and the switch box controlling selection of a satellite corresponding to the selected channel based on the voltage level of the command. Thus, it is easier to control timing since the LNB voltage is set and the DiSEqC command is output by the single demodulator.

The demodulator may change the voltage level of the command in response to the control signal, and superimpose the channel information to the command having the changed voltage level. Thus, it is possible to decrease a risk of a tuning fail due to error in the timing control, and reduce visual inconvenience of a user.

The demodulator may superimpose the channel information to the command at timing when a predetermined time elapses after changing the voltage level of the command. Thus, it is possible to more stably provide a viewing service while satisfying the standards.

The LNB may down-convert a broadcast signal of a predetermined band received from a satellite to a usable frequency of the broadcast signal receiving apparatus based on information about the selected channel included in the command. Thus, it is possible to selectively receive a broadcast signal corresponding to a desired channel between horizontal polarization and vertical polarization.

The command may include a tone burst signal based on a predetermined communication protocol and tone signals sequentially output with time gaps from the tone burst signal, and may be controlled to receive a broadcast signal having a frequency band corresponding to one of a low band and a high band in accordance with the tone signals. Thus, it is possible to exchange a command between the relay and the broadcast signal receiving apparatus supporting the DiSEqC protocol.

The switch box may include a channel router configured to have a plurality of ports connectable with a plurality of broadcast signal receiving apparatuses by a single cable, and receive the command from the plurality of broadcast signal receiving apparatuses. Thus, it is possible to transmit a command to even a SatCR that uses a single cable to receive the command from the plurality of broadcast signal receiving apparatuses.

The demodulator may receive the control signal from the processor through an I2C interface, and the command may include a digital satellite equipment control (DiSEqC) command based on a DiSEqC protocol. Thus, the present inventive concept is applicable to a broadcast signal receiving apparatus supporting I2C and a DiSEqC interface.

The broadcast signal receiving apparatus may further include a radio frequency (RF) tuner configured to receive a broadcast signal through the relay and be tuned to the selected channel, and the demodulator may receive a broadcast signal output from the RF tuner and outputs a demodulated transport stream. Thus, it is possible to add an LNB voltage setting function to the demodulator for demodulating a signal.

### Advantageous Effects of Invention

According to exemplary embodiments, the control block for setting the voltage of the control signal transmitted corresponding to the channel selection is provided in the demodulator, and therefore both the control of the LNB voltage and the generation and output of the DiSEqC command are implemented in the single element, thereby accurately controlling the timing.

Therefore, it is possible to reduce the tuning fail due to the timing control performed in different elements, and thus more improved viewing circumstances/services are provided since a user's visual inconvenience and risk are decreased and stability of the selected channel is guaranteed.

Accordingly, it is advantageous for a manufacturer to decrease noise due to too complex and unnecessary circuits, and make the system small/simple since the size of the PCB is reduced.

### Brief Description of Drawings

FIG. 1 is a view schematically showing a satellite broadcast system according to an exemplary embodiment,
FIG. 2 and FIG. 3 show examples of the satellite broadcast system of FIG. 1,
FIG. 4 is a block diagram showing a broadcast signal receiving apparatus according to an exemplary embodiment,
FIG. 5 is a block diagram for explaining that a broadcast signal is processed and transmitted in the broadcast signal receiving apparatus of FIG. 4,
FIG. 6 illustrates a DiSEqC signal defined using a 22KHz tone signal according to an exemplary embodiment,
FIG. 7 illustrates a timing diagram of a tone burst signal,
FIG. 8 illustrates a timing diagram of a DiSEqC command,
FIG. 9 is a view for explaining operations of the broadcast signal receiving apparatus realized in such a manner that a tuner chip and a main SoC are mounted to a PCB according to an exemplary embodiment,
FIG. 10 is a view for explaining detailed operations of a demodulator in the tuner chip of FIG. 9,
FIG. 11 illustrates a broadcast signal receiving apparatus where an LNB IC is separately provided,
FIG. 12 sequentially shows operations of outputting a control command from the broadcast signal receiving apparatus of FIG. 11 to a relay,
FIG. 13 is a graph showing an example of the control command output by the operations of FIG. 12,
FIG. 14 sequentially shows operations of outputting the control command to the relay if the LNB control block is included in the demodulator according to an exemplary embodiment,
FIG. 15 is a graph showing an example of the command output by the operations of FIG. 14, and
FIG. 16 is a flowchart showing a method of controlling the broadcast signal receiving apparatus according to an exemplary embodiment.

### Best Mode for Carrying out the Invention

Below, exemplary embodiments will be described with reference to accompanying drawings to such an extent as to be easily realized by a person having an ordinary knowledge in the art. The present inventive concept is not limited to the embodiments set forth herein, and may be materialized variously. For clarity, elements not directly related to the elements of the exemplary embodiment may be omitted, and like numerals refer to like elements throughout. In the following descriptions, terms such as "include" or "have" refer to presence of features, numbers, steps, operations, elements or combination thereof, and do not exclude presence or addition of one or more other features, numbers, steps, operations, elements or combination thereof.

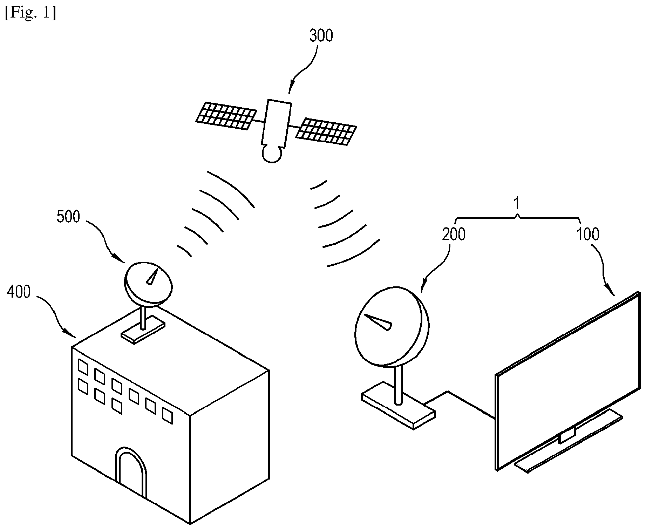

FIG. 1 is a view schematically showing a satellite broadcast system 1 according to an exemplary embodiment.

As shown in FIG. 1, the satellite broadcasting system 1 according to an exemplary embodiment has a basis structure of transmitting a signal based on a satellite relay, and includes a terrestrial relay 200 which wirelessly receives a broadcast signal from a communication satellite 300, and a broadcast signal receiving apparatus 100 which receives the broadcast signal through the terrestrial relay 200 by a wire and processes the received broadcast signal to be displayed as an image. In FIG. 1, the broadcast signal receiving apparatus 100 is a display apparatus such as a television (TV), but not limited thereto and may be achieved by a set-top box (STB) or other various devices.

The communication satellite 300 receives a broadcast signal from a broadcasting station, and returns it to the Earth after the received broadcast signal undergoes amplification/frequency conversion in the satellite.

For example, a radio frequency (RF) broadcast signal output from broadcast transmission equipment, i.e. a transmitting antenna 500 of a broadcasting station 400 may be converted into an uplink signal and transmitted to the communication satellite 300. The communication satellite 300 receives the uplinked RF signal and a downlink signal corresponding to the uplink signal to the relay 200 of the broadcast signal receiving apparatus 100.

The communication satellite 300 may be provided with a satellite relay, i.e. a transponder to amplify an uplinked RF carrier within a predetermined frequency band and convert these RF frequencies into a signal of GHz.

In this exemplary embodiment, the terrestrial relay 200 (hereinafter, referred to as a "relay") connected to the broadcast signal receiving apparatus 100 receives a satellite broadcast signal from one or more communication satellites 300 located on a geostationary orbit of the Earth.

The relay 200 receives a downlinked RF signal from the communication satellite 300 through one or more satellite dishes in response to a request from the broadcast signal receiving apparatus 100, and transmits the downlinked signal to the broadcast signal receiving apparatus 100.

The broadcast signal receiving apparatus 100 processes the broadcast signal received through the relay 200 so as to be displayed as an image. If the broadcast signal receiving apparatus 100 is the television, it displays a broadcast image by itself. If the broadcast signal receiving apparatus 100 is the set-top box, it outputs the processed image signal to a separate display apparatus so that the display apparatus can display an image based on the image signal.

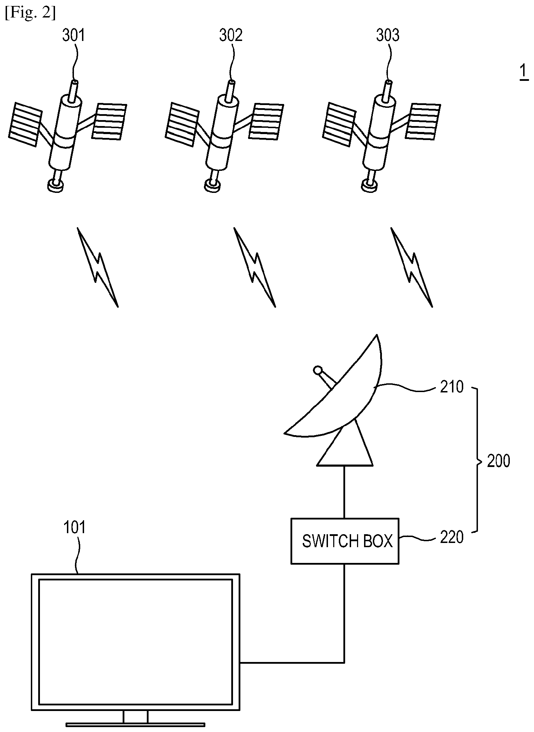

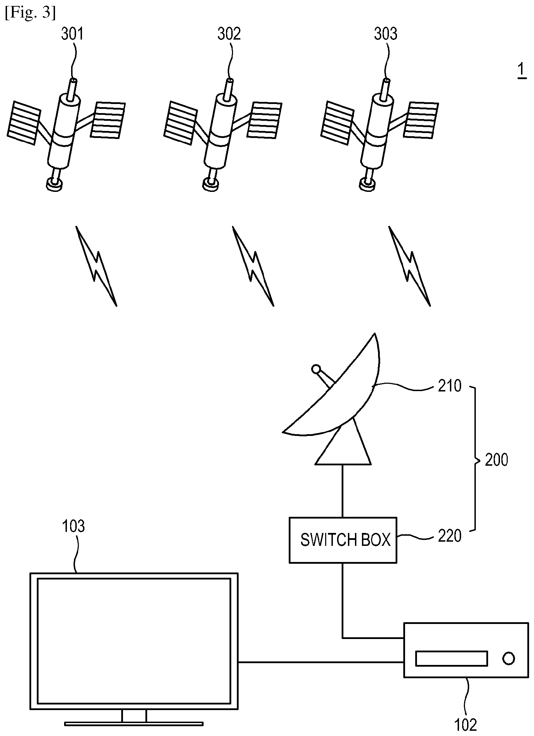

FIG. 2 and FIG. 3 show examples of the satellite broadcast system of FIG. 1.

As shown in FIG. 2 and FIG. 3, the satellite broadcasting system 1 according to exemplary embodiments includes a broadcast signal receiving apparatus 101, 102 for receiving and processing a broadcast signal; a terrestrial relay 200 for relaying the satellite broadcast signal; and satellites 301, 302 and 303 for transmitting the satellite broadcast signal.

In this exemplary embodiment, the terrestrial relay 200 includes an LNB 210 provided in the satellite antenna, and a switch box 220 (hereinafter, referred to as a switch device or a switch). The LNB 210 is provided in the satellite antenna, and converts and amplifies a high-frequency signal (for example, with 10,700 to 12,700 MHz in case of a Ku-Band) transmitted from the satellite into a signal of 1GHz (for example, within a range of 650 to 2,150 MHz) to be processible in the broadcast signal receiving apparatus 101, 102. Further, the LNB 210 can filter noise out of the signal received through the satellite antenna.

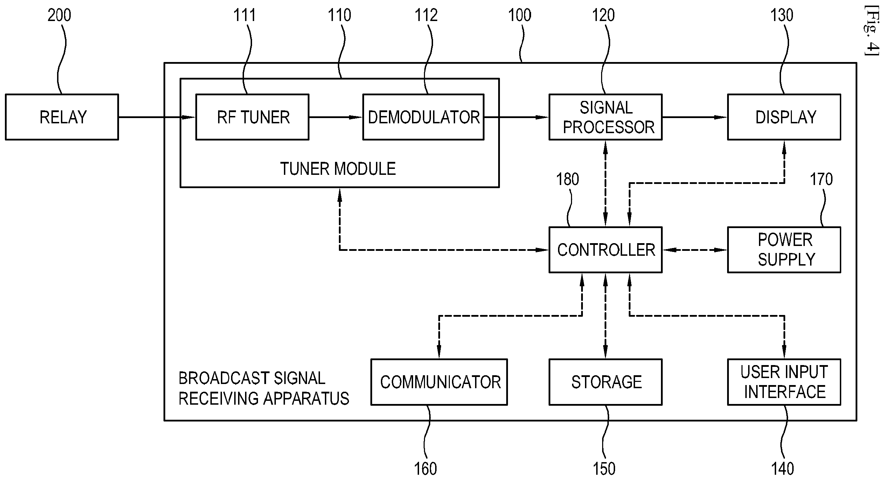

The switch box 220 controls a broadcast signal to be selectively received corresponding to a voltage level (for example, 13V or 18V) of a signal received from a demodulator 112 (to be described later, see FIG. 4). The signal received from the satellite 301, 302 or 303 has vertical polarization or horizontal polarization. For example, the switch box 220 may control a broadcast signal to be received from one of the satellites 301, 302 and 303 corresponding to the vertical polarization or the horizontal polarization.

The foregoing selective reception, i.e., switching of a broadcast signal (horizontal polarization (H) or vertical polarization (V)) corresponding to the voltage level is called H/V polarization switching.

In this exemplary embodiment, the switch box 220 may be achieved by a satellite automatic selector, e.g. a DiSEqC switch of automatically selecting the satellite corresponding to a channel selected by a user. Further, the switch box 220 according to an exemplary embodiment may be achieved by a channel router, for example, a satellite channel router, a satellite control router or a single cable router (SatCR), which receives a channel changing command from a plurality of broadcast signal receiving apparatuses using a single cable.

The broadcast signal receiving apparatus according to an exemplary embodiment may be achieved by a TV 101 as shown in FIG. 2, which receives and processes a broadcast signal and displays an image based on the processed broadcast signal.

The broadcast signal receiving apparatus according to another exemplary embodiment may be achieved by a set-top box 102 as shown in FIG. 3, which outputs video/audio signals to the display apparatus 103 such as the TV.

The broadcast signal receiving apparatus 101, 102 receives a broadcast signal from a broadcasting station and the like image source (i.e. image source), that is, from a headend.

This embodiment shows that the broadcast signal receiving apparatus 100, 102 is a satellite broadcast signal receiving apparatus that processes a broadcast signal based on broadcast signal/broadcast information/broadcast data received from a communication satellite. However, the kind of image signal to be processed in the broadcast signal receiving apparatus 100, 102 is not limited to the satellite broadcast signal. For example, the broadcast signal receiving apparatus 101, 102 may receive a signal from various external apparatuses, e.g. a smart phone, a smart pad such as a tablet personal computer (PC), a mobile device including an MP3 player, a PC such as a desktop computer or a laptop computer, etc. Further, the broadcast signal receiving apparatus 101, 102 may process a signal so that the display apparatus 101, 103 such as the television can display a moving image, a still image, an application, an on-screen display (OSD), a user interface (UI or also called a graphic user interface (GUI)) for controlling various operations, etc. based on signal/data stored in an internal/external storage medium.

The broadcast signal received in the broadcast signal receiving apparatus 101, 102 may be received through a terrestrial wave, a cable, etc., and the image source in this exemplary embodiment is not limited to the broadcasting station. That is, the image source may include any device or station as long as it can transmit and receive information.

In this exemplary embodiment shown in FIG. 2 and FIG. 3, the display apparatus 101, 103 may be achieved by a Smart TV or an Internet Protocol (IP) TV. The Smart TV can receive and display a broadcast signal in real time, and has a web browsing function so that the broadcast signal can be displayed in real time and at the same time various contents can be searched and consumed through Internet. To this end, the Smart TV provides an interface convenient for a user. Further, the Smart TV includes an open software platform in order to provide an interactive service to a user. Therefore, the Smart TV may provide a user with an application that offers various contents, e.g., a predetermined service to a user through the open software platform. Such an application is an application program capable of providing various kinds of service. For example, the application includes applications for social network service (SNS), finance, news, weather, a map, music, movie, a game, an electronic book, etc.

In the exemplary embodiment of FIG. 3, the display apparatus 103 may further receive video on demand (VOD) or the like service from a service provider through the broadcast signal receiving apparatus 102, i.e. the set-top box.

Further, the broadcast signal receiving apparatus 100 may be a monitor or the like connected to a computer.

The broadcast signal receiving apparatus 100 communicates with the relay 200 based on a preset communication protocol. For example, if a user makes a channel change event, the broadcast signal receiving apparatus 100 transmits a command corresponding to this event to the relay 200, and receives and processes a broadcast signal corresponding to the command through the relay 200.

Various kinds of standards may be applied to the communication protocol or communication format between the broadcast signal receiving apparatus 100 and the relay 200, and communication between them is enabled only when both the broadcast signal receiving apparatus 100 and the relay 200 support the standards. In this exemplary embodiment, DiSEqC may be used as the communication standards between the broadcast signal receiving apparatus 100 and the relay 200, and details thereof will be described later.

FIGs. 1 to 3 show the system 1 where one broadcast signal receiving apparatus 100 is connected to one relay 200. Alternatively, the system 1 may include a plurality of broadcast signal receiving apparatuses 100 is connected to one relay 200, and this exemplary embodiment will be described later.

In other words, the following embodiments to be described later are just examples that may vary depending on the systems, and thus do not limit the scope of the invention.

Below, details of the broadcast signal receiving apparatus according to an exemplary embodiment will be described with reference to accompanying drawings.

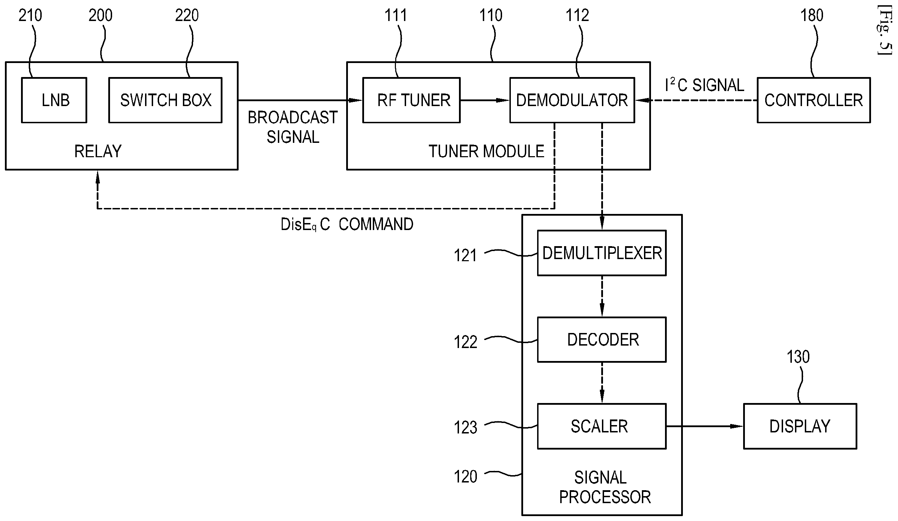

FIG. 4 is a block diagram showing a broadcast signal receiving apparatus according to an exemplary embodiment, and FIG. 5 is a block diagram showing operations of processing and transmitting a broadcast signal in the broadcast signal receiving apparatus of FIG. 4. The broadcast signal receiving apparatus 100 shown in FIGs. 4 and 5 are substantially the same as the broadcast signal receiving apparatuses 100, 101 and 102 shown in FIG. 1 to FIG. 3, and thus applicable to the broadcast signal receiving apparatuses 100, 101 and 102 shown in FIG. 1 to FIG. 3.

As shown in FIG. 4, the broadcast signal receiving apparatus 100 according to an exemplary embodiment includes a tuner module 110 tuned to a channel for receiving a broadcast signal, a signal processor 120 for processing the broadcast signal received in the tuner module 110 to be displayed as an image, a display 130 for displaying an image based on the broadcast signal processed by the signal processor 120, a user input interface 140 for receiving a user's input, a communicator 150 for communicating with the exterior, a storage 160 for storing various pieces of data, a power supply 170 for supplying power to elements of the broadcast signal receiving apparatus 100, and a controller 180 for controlling the broadcast signal receiving apparatus 100.

The tuner module 110 includes an RF tuner 111 and a demodulator 112.

In this exemplary embodiment, the RF tuner 111 receives a broadcast signal, i.e. an RF signal from the satellite 300 through the relay 200 by a wire.

The RF tuner 111 can be tuned to channels for receiving broadcast signals. The RF tuner 111 may for example be achieved by an RF IC that including a mixer, a phase locked loop (PPL) and an oscillator.

In this exemplary embodiment, the RF tuner 111 mixes a broadcast signal with an oscillation frequency, performs down-converting (i.e. converting the mixed signal to have an intermediate frequency) and amplification, and outputs the converted and amplified signal to the demodulator 112. Here, the signal output to the demodulator 112 is a filtered quadrature phase shift keying (QPSK) modulation signal or octal phase shift keying (8PSK) modulation signal.

The demodulator 112 demodulates a digital broadcast single of a tuned channel and outputs a signal in the form of a transport stream (TS). The demodulator 112 may for example receive signals of I and Q channels as a QPSK modulation signal, i.e. IP, IN, QP and QN signals, and demodulate them, thereby outputting a TS signal.

In this exemplary embodiment, the demodulator 112 may send the relay 200 a command signal, which has a predetermined voltage level and includes channel information of a selected channel, in response to a channel changing signal corresponding to a channel selected by a user.

The broadcast signal receiving apparatus 100 according to an exemplary embodiment may include the tuner module 110 where the RF tuner 111 and the demodulator 112 are integrated. The tuner module 110 achieved by such a single element, for example, a single chip is mounted to a printed circuit board (PCB) provided inside the broadcast signal receiving apparatus 100.

Alternatively, the RF tuner 111 and the demodulator 112 according to an exemplary embodiment may be respectively provided as a tuner chip and a demodulator chip and mounted to the PCB.

The signal processor 120 performs various video/audio processing processes previously set with regard to a broadcast signal received through the tuner module 110. The signal processor 120 sends an output signal generated or combined by performing the video processing processes to the display 130, so that the display 130 can display an image and output a sound corresponding to the broadcast signal.

As shown in FIG. 5, the signal processor 120 includes a dnemultiplexer 121 that demultiplexes a broadcast signal into signals according to characteristics, such as an image signal, an audio signal, and various additional data; a decoder 122 that decodes the TS signal according to video formats of the broadcast signal receiving apparatus 100; and a scaler 123 that adjusts the broadcast signal according to output scales of the display 130. In this exemplary embodiment, the decoder 122 may be for example achieved by a moving picture experts group (MPEG) decoder.

The kind of video processing processes performed by the signal processor 120 is not limited to those shown in FIG. 5 and may for example include de-interlacing for converting an interlaced type into a progressive type, noise reduction for improving image quality, detail enhancement, frame refresh rate conversion, etc.

The signal processor 120 may be achieved by an individual group for independently performing each of the processes, or may be achieved by a system-on-chip (SoC) where various functions corresponding to such processes are integrated. That is, the signal processor 120 in this exemplary embodiment may include a main SoC mounted to the PCB provided inside the broadcast signal receiving apparatus 100, in which the main SoC may include at least one processor that realizes the controller 180 to be described later. In this case, the broadcast signal receiving apparatus 100 includes a PCB mounted with a tuner chip corresponding to the tuner module 110 and the main SoC.

The broadcast signal processed by the signal processor 120 is output to the display 130. The display 130 displays an image based on the broadcast signal received from the signal processor 120.

In this embodiment, the display 130 may for example be achieved by liquid crystal, plasma, a light emitting diode (LED), an organic light-emitting diode (OLED), a surface-conduction electron-emitter, a carbon nano-tube (CNT), nano-crystal, or the like various displays, without limitation.

Further, the display 130 may include additional elements in accordance with its types. For example, if the display 130 is achieved by the liquid crystal, the display 130 includes a liquid crystal display (LCD) panel (not shown), a backlight unit (not shown) for supplying light to the LCD panel, and a panel driver (not shown) for driving the panel (not shown).

In this exemplary embodiment, the display 130 may include a touch screen may include a touch screen for receiving input corresponding to a user's touch. The touch screen may be for example achieved by a resistive type, a capacitive type, an infrared type or an acoustic wave type.

The touch screen may display an object (e.g., a menu, a text, an image, a moving image, a figure, an icon and a shortcut icon) including various menu items as a user interface (UI). Thus, a user touches the object displayed on the touch screen with his/ her body (e.g., a finger) or a separate pointing device such as a stylus, thereby performing his/her input.

The touch screen may provide a user with a UI corresponding to various services (e.g., a phone call, data transmission, broadcasting, photographing, a moving image or an application). The touch screen sends the controller 180 an analog signal corresponding to a single or multi touch input corresponding to selection on the UI. Here, the touch input includes drag, flick, drag & drop, tap, long tap, etc.

If the broadcast signal receiving apparatus 100 is the set-top box, the broadcast signal receiving apparatus 100 may further include an audio/video (A/V) output (not shown) for outputting a video or audio signal processed by the signal processor 120 to the display apparatus 103 (see FIG. 3) connected by a data communication cable such as a D-sub cable. The A/V output is connected to an A/V input of the display apparatus 103 and transmits the video/audio signal.

The user input interface 140 shown in FIG. 4 sends various preset control command or limitless information to the controller 180 in response to a user's control and input.

In this exemplary embodiment, the user input interface 140 may include a keypad (or an input panel, not shown) with a power key, numeral keys, menu keys or the like buttons provided in a main body of the broadcast signal receiving apparatus 100; a remote controller that generates a preset command/data/information/signal for remotely controlling the broadcast signal receiving apparatus 100 and transmits it to the broadcast signal receiving apparatus 100 or the display apparatus 200; a keyboard; a mouse; or the like peripheral input device separated from the main body, thereby receiving a user's input. The remote controller may further include a touch sensor for sensing a user's touch and a motion sensor for sensing its own motion caused by a user.

The input device is an external device capable of wirelessly communicating with the main body of the broadcast signal receiving apparatus 100, and the wireless communication includes Bluetooth, infrared communication, radio frequency (RF) communication, wireless local area network (LAN), Wi-Fi direct, etc. The input device is controlled by a user and thus transmits a preset command to the broadcast signal receiving apparatus 100.

The keypad includes a physical keypad formed in front and/or lateral sides of the broadcast signal receiving apparatus 100, a virtual keypad displayed on the display 130, and a wirelessly connectable physical keypad. It will be easily appreciated by those skilled in the art that the physical keypad formed in front and/or lateral sides of the broadcast signal receiving apparatus 100 may be excluded in accordance with the performance or structure of the broadcast signal receiving apparatus 100.

In this exemplary embodiment, the broadcast signal receiving apparatus 100 receives a user's input about channel selection through the user input 140.

The storage 150 stores limitless data under control of the controller 180. The storage 150 may include a nonvolatile memory, a volatile memory, a flash memory, a hard disk drive (HDD) or a solid state drive (SSD). The storage 150 is accessed by the controller 180, and performs reading/ recording/ modifying/ deleting/ updating/ and the like with regard to data under control of the controller 180.

The data stored in the storage 150 may for example includes not only an operating system for driving the broadcast signal receiving apparatus 100, but also various applications, image data, additional data, etc. executable on this operating system.

Specifically, the storage 150 may store a signal or data input/output corresponding to operations of the respective elements 110 to 170 under control of the controller 180. The storage 150 may store a graphic user interface (GUI) related to a control program for controlling the broadcast signal receiving apparatus 100 and an application provided by a manufacturer or downloaded from the outside, images for providing the GUI, user information, a document, a database, or related data.

According to an exemplary embodiment, the term of 'storage' refers to the storage 150, a read only memory (ROM, not shown) in the controller 180, a random access memory (RAM, not shown) or a memory card (not shown, for example, a micro SD card, a memory stick, etc.) mounted to the broadcast signal receiving apparatus 100.

The communicator 160 includes a wired/wireless communication module to communicate with an external device such as an input device.

The communicator 160 transmits a command/data/information/signal received from the external device to the controller 180. Further, the communicator 160 can transmit a command/data/information/signal received from the controller 180 to the external device.

The communicator 160 includes a wired or wireless communication interface to perform data communication with the exterior. For example, the communicator 160 may support at least one of the communication interfaces 1 to N such as a wired local area network (LAN), Bluetooth, Wi-Fi Direct, radio frequency, Zigbee, a wireless LAN, Wi-Fi, infrared communication, ultra-wideband (UWB), near field communication (NFC), etc. Here, the communicator 160 may use wireless communication for communication between the broadcast signal receiving apparatus 100 and the input device.

In addition, the communicator 160 may further receive a video signal corresponding to standards such as composite video, component video, super video, SCART, high definition multimedia interface (HDMI), etc. by a cable or the like wire.

The communicator 160 according to an exemplary embodiment is provided inside a main body of the broadcast signal receiving apparatus 100, but not limited thereto. Alternatively, the communicator 160 may be provided in the form of a dongle or a module and detachably connected to a connector (not shown) of the broadcast signal receiving apparatus 100.

In the broadcast signal receiving apparatus 100 according to an exemplary embodiment, the communicator 160 includes a DiSEqC interface to support data communication with the relay 200 by a wire.

The DiSEqC protocol has many versions different in function, and each version is as follows.

DiSEqC 1.0 allows switching between up to 4 satellite sources. DiSEqC 1.1 allows switching between up to 16 satellite sources. DiSEqC 1.2 allows switching between up to 16 satellite sources, and control of a single axis satellite motor (not shown). Here, the satellite motor (not shown) is provided in the relay 200 and adjusts the orientation of the satellite antenna of the relay 200 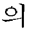 the satellite antenna, DiSEqC 1.2 allows the orientation of the satellite antenna of the relay 200 to be adjusted so that the broadcast signal receiving apparatus 100 can select a satellite for receiving a broadcast signal.

DiSEqC 2.0 adds bi-directional communications between the relay 200 and the broadcast signal receiving apparatus 100 to DiSEqC 1.0. DiSEqC 2.1 adds bi-directional communications between the relay 200 and the broadcast signal receiving apparatus 100 to DiSEqC 1.1. DiSEqC 2.2 adds bi-directional communications between the relay 200 and the broadcast signal receiving apparatus 100 to DiSEqC 1.2. That is, DiSEqC 2.x allows the broadcast signal receiving apparatus 100 and the relay 200 to exchange a command with each other.

The broadcast signal receiving apparatus 100 according to an exemplary embodiment sends the relay 200 a command, which has a voltage level corresponding to a broadcast signal and includes channel information of a selected channel, in response to channel selection in the user input 140. Here, the demodulator 112 of the broadcast signal receiving apparatus 100 generates and outputs a command corresponding to a predetermined voltage level, and this command is a DiSEqC command based on the DiSEqC protocol

The DiSEqC command has a digital format, in which '0' and '1' of a digital signal are materialized using an analog signal of 22KHz tone signal.

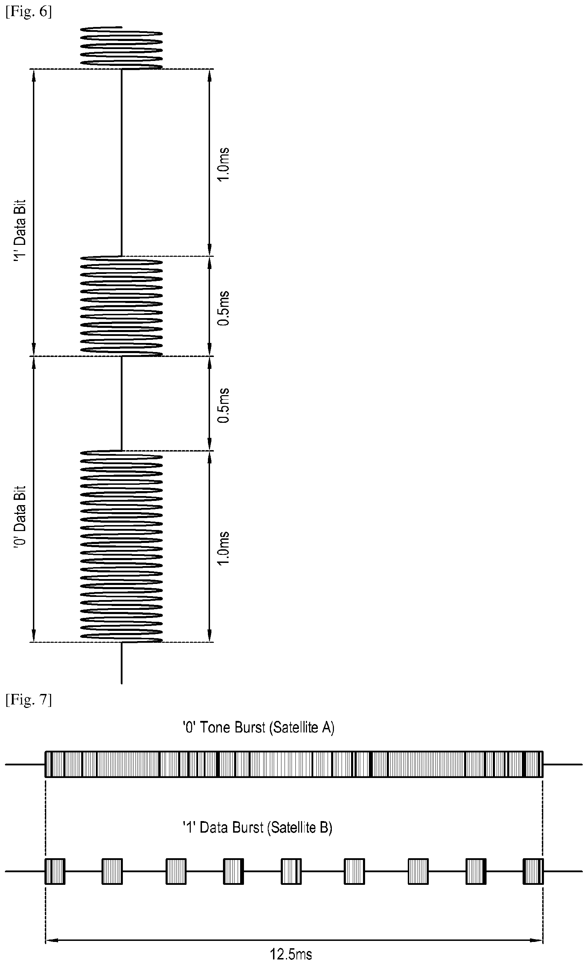

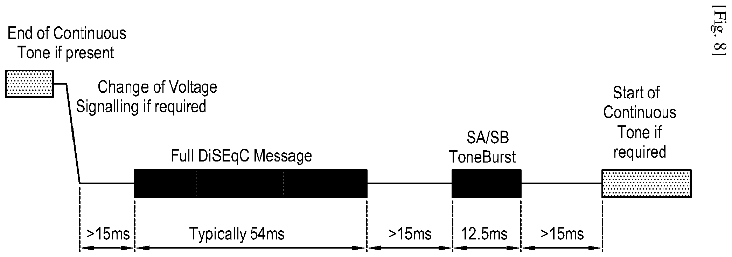

FIG. 6 illustrates a DiSEqC signal defined using a 22KHz tone signal according to an exemplary embodiment, FIG. 7 illustrates a timing diagram of a tone burst signal, and FIG. 8 illustrates a timing diagram of a DiSEqC command.

In the broadcast signal receiving apparatus 100 according to an exemplary embodiment, tone signals are made to materialize '0' data bit or '1' data bit as shown in FIG. 6, and a DiSEqC command is generated by combination of them. The DiSEqC command with such generated bits is transmitted to the relay 200 through a cable, so that the switch box 220 can control switching between the satellite sources, i.e. H/V polarization switching.

DiSEqC data is superimposed to a signal having one voltage level between 13V and 18V for the H/V polarization switching, inserted in a continuous 22 kHz tone signal to select a satellite, and provides short "quiet" gaps before and after the DiSEqC command burst. DiSEqC messages consist of one or more bytes of data.

The tone burst uses a 22 kHz carrier, and two types of tone-burst are used as shown in FIG. 7, one is Unmolulated to select Satellite Position A, and the other is Modulated to select Satellite Position B.

The frequency band of the broadcast signal to be received corresponding to the selected channel, i.e. a high band (for example, 11.7 to 12.75GHz) or a low band (for example, 10.7 to 11.7GHz) is determined by the tone signal as shown in FIG. 8. By the tone signal, the receiving band is controlled in the LNB 210.

In other words, as shown in FIG. 8, the DiSEqC command output from the broadcast signal receiving apparatus 100 to the relay 200 according to an exemplary embodiment is defined in such a manner that a LNB voltage is determined (for example, change from 18V into 13V), a DiSEqC switch command (Typical 54ms) is output after 15ms, and a 22 KHz tone signal is output after 15ms. FIG. 8 shows that the LNB voltage is changed from 18V to 13V, by way of example. Alternatively, the DiSEqC command may be given in such a manner that the LNB voltage may be changed from 13V to 18V in response to a user's channel change.

In the broadcast signal receiving apparatus 100 according to an exemplary embodiment, the switch body 220 of the relay 200 is achieved by the channel router, i.e. SatCR for receiving a channel changing command from the plurality of broadcast signal receiving apparatuses using a single cable. Thus, the DiSEqC command output in case of using the channel router is defined as follow.

When a channel is changed by a user's selection, the LNB voltage is changed from 13V into 18V, and a DiSEqC Command having information about the changed channel is output after 4∼20ms, and the voltage is changed from 8V to 13V within 2∼40ms. Here, the SatCR makes the plurality of broadcast signal receiving apparatuses exchange data with the relay 200 through a unicable or single cable, and therefore the command having information for identifying the corresponding broadcast signal receiving apparatus (or the tuner), i.e. having a port number is output. Further, if one broadcast signal receiving apparatus completely outputs the command, the voltage level is changed from 18V into 13V so that another broadcast signal receiving apparatus can output a command.

The power supply 170 supplies power to the elements 110 to 160 and 180 of the broadcast signal receiving apparatus 100 under control of the controller 180. The power supply 170 converts external alternating current (AC) power into direct current (DC) power, regulates the converted DC power to have a predetermined level, and supplies the regulated power to the elements 110 to 160 and 180 of the broadcast signal receiving apparatus 100. The power supply 170 may be for example achieved by a switching mode power supply (SMPS), and may include a power converter (not shown) having a transformer circuit that drops a DC power into predetermined levels corresponding to rated voltages of the internal elements 110 to 160 and 180 of the broadcast signal receiving apparatus 100.

In the broadcast signal receiving apparatus 100 according to an exemplary embodiment, power having a voltage level of 13V or 18V is supplied from the power supply 170 to the relay 200 through the demodulator 112, and thus a broadcast signal is selectively received corresponding to the voltage level.

The controller 180 performs control with regard various elements of the broadcast signal receiving apparatus 100. Specifically, the controller 180 controls the general operations of the broadcast signal receiving apparatus 100 and signal flow between internal elements 110 to 170 of the broadcast signal receiving apparatus 100 and processes data. For example, the controller 180 performs reception/division/video processing process for a broadcast signal to be processed by the tuner module 110 and the signal processor 120, and performs control operations corresponding to a command from the user input interface 140 such as an input device, thereby controlling general operations of the broadcast signal receiving apparatus 100.

The controller 180 controls power supplied from the power supply 170 to the internal elements 120 to 160. If there is a user's input or if a previously set and stored condition is satisfied, the controller 180 may perform an operating system (OS) and various applications stored in the storage 160.

The controller 180 may include at least one processor; a nonvolatile memory, i.e. a read only memory in which a control program for controlling the broadcast signal receiving apparatus 100 is stored; and a volatile memory, i.e. a random access memory (RAM) which stores a signal or data received from the exterior of the broadcast signal receiving apparatus 100, or is used as a storage area for various jobs implemented in the broadcast signal receiving apparatus 100. The processor loads a program from the ROM to the RAM to thereby execute the program.

According to an exemplary embodiment, the controller 180 is achieved by at least one universal processor such as a central processing unit (CPU), an application processor (NP), a microcomputer (MICOM), etc. For example, the controller 180 loads a program into the RAM in accordance with a predetermined algorithm stored in the ROM, and executes the program, thereby controlling the broadcast signal receiving apparatus 100 to do various operations.

If the controller 180 of the broadcast signal receiving apparatus 100 is achieved by a single processor, e.g. the CPU, the CPU may be provided to implement various functions of the broadcast signal receiving apparatus 100, for example, to control various video processing processes such as decoding, demodulating, scaling, etc. with regard to an image displayed on the display, response to a user command received through the user input interface 140 including the input device, wired/wireless network communication with the external device through the communicator 160, and so on.

The processor may include single-core, dual-core, triple-core, quad-core and the multiple-core. The processor may include a plurality of processors, for example, a main processor and a sub processor operating in a sleep mode where the broadcast signal receiving apparatus is idle with only standby power. Further, the processor, the ROM and the RAM are connected to one another by an internal bus.

According to an exemplary embodiment, if the broadcast signal receiving apparatus 100 is a monitor, the controller 180 may further include a graphic processing unit (GPU, not shown) for graphing processing.

Alternatively, if the broadcast signal receiving apparatus 100 is a digital TV, a smart phone or a smart pad, the processor may for example include a GPU in the form of system on chip (SoC) where the core and the GPU are combined.

According to another exemplary embodiment, the controller 180 may include a chip, e.g. an integrated chip (IC) as a program and a dedicated processor for executing the program to perform a certain function supported in the broadcast signal receiving apparatus 100, for example, to transmit a command to the relay 200 in response to the channel selection.

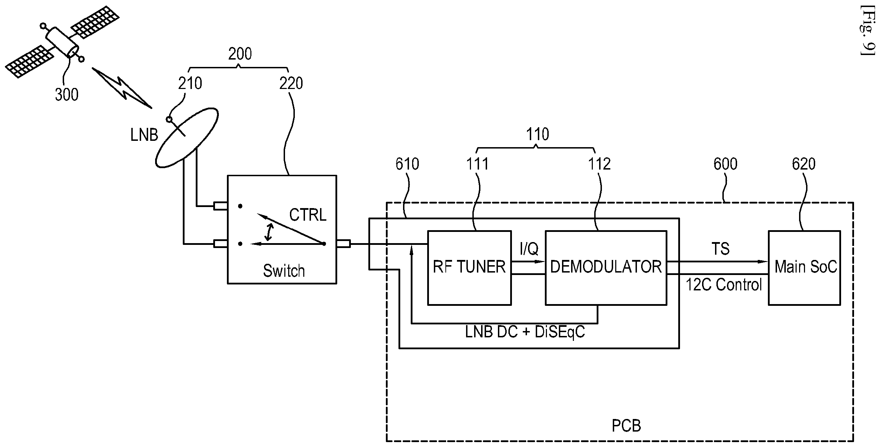

As an example of the controller 180 in this exemplary embodiment, the processor may be included in the main SoC 620 mounted to the PCB 600 (see FIG. 9) provided inside the broadcast signal receiving apparatus 100. The main SoC 620 may further include the signal processor 120 to process the broadcast signal to be displayed as an image. In this case, the broadcast signal receiving apparatus 100 includes a tuner chip 610 corresponding to the tuner module 110, and the PCB to which the main SoC 620 functioning as the signal processor 120 and the controller 180 is mounted.

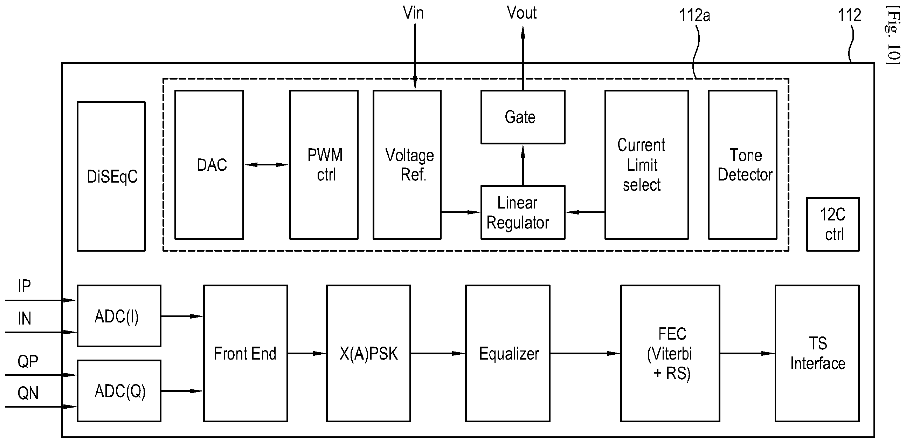

FIG. 9 is a view for explaining operations of the broadcast signal receiving apparatus 100 realized in such a manner that the tuner chip 610 and the main SoC 620 are mounted to the PCB 600 according to an exemplary embodiment, and FIG. 10 is a view for explaining detailed operations of the demodulator 112 in the tuner chip 610 of FIG. 9,

As shown in FIG. 5 and FIG. 9, the controller 180 provided in the main SoC 620 of the broadcast signal receiving apparatus 100 outputs a control signal corresponding to the channel change to the demodulator 112 provided in the tuner chip 610 in response to a predetermined event such as a user's channel change received through the user input 150. Here, the control signal output to the demodulator 112 is an I2C control signal using the internal bus.

The demodulator 112 sends the relay 200 a command, which has a voltage level, i.e. 13V or 18V corresponding to a selected channel, and includes channel information of the selected channel, though a cable in response to a channel changing signal output from the controller 180. The command output to the relay 200 has the format of DiSEqC command described with reference to FIG. 6 to FIG. 8, and tone bursts and DiSEqC messages are sequentially output with time gaps therebetween.

For example, if a broadcast signal of a vertical polarization is selected to be received corresponding to channel selection, the demodulator 112 may output a signal having a voltage level of 13V and including the DiSEqC command. Further, the DiSEqC command includes the channel information corresponding to the selected channel, i.e. information about a high band or a low band.

The relay 200 receives a broadcast signal of the corresponding band from the satellite 300 corresponding to the broadcast signal of the channel selected based on the received DiSEqC command, and transmits the received broadcast signal to the RF tuner 110 through the cable. Further, the broadcast signal received in the RF tuner 110 is demodulated into a transport stream (TS) signal by the demodulator 1120 and then processed by the signal processor 120 provided in the main Soc 620 so as to be displayed as an image on the display 130.

As shown in FIG. 10, the demodulator 112 of the broadcast signal receiving apparatus 100 according to an exemplary embodiment additionally includes a control block 112a for controlling the LNB voltage of the relay 200.

If receiving a control signal (e.g. I2C control signal) from the controller 180 in response to an event such as a user's channel selection, the LNB control block 112a outputs a signal having a voltage level corresponding to the selected channel to the relay 200. The LNB control block 112a controls the relay 200 to perform switching the broadcast signal received from the satellite 300 in accordance with the selected channel while supplying power to the relay 200 by the output signal.

As shown in FIG. 10, the LNB control block 112a includes a DAC and a pulse width modulation (PWM) controller (ctrl) to generate a DiSEqC command using an analog signal of 22kHz tone signal. As shown in FIG. 6, the DiSEqC command is generated by the DAC through combination of digital signals, i.e. '0' data bit and '1' data bit, and adjusted in pulse width by the PWM controller. Here, the LNB control block 112a is provided with a tone detector for detecting the 22kHz tone signal generated based on the control signal from the controller 180.

The LNB control block 112a further includes a voltage comparator (voltage Ref.) which receives a voltage Vin from the power supply 170 and outputs a voltage by comparing the input voltage with a reference voltage; a linear regulator which adjusts, i.e. regulates the voltage output from the voltage comparator; and an output gate which outputs the DiSEqC command having the adjusted voltage level to the relay 200. The voltage of the DiSEqC command output from the output gate has one of 13V and 18V so as to make the H/V polarization switching possible through the switch box 220 of the relay 200. A current limit selector controls the voltage of the output signal from the output gate to be regulated by the linear regulator to have one of 13V and 18V.

Referring to FIG. 10, the demodulator 112 includes an ADC (I) and an ADC (Q) which respectively receive I channel signals IP and IN and Q channel signals QP and QN from the RF tuner 110 and convert them into digital signals; a front end which receives the digital signals from the ADC (I) and the ADC (Q) selects a desired signal to correspond to a selected channel; a mapper X(A)PSK which performs mapping the output signals from the front end with four or eight constellations so that the broadcast signal modulated by QPSK or 8PSK can be demodulated; an equalizer which adjusts the demodulated signals to have a certain amplitude; a forward error corrector (FEC) which corrects an error by Viterbi decoding and RS decoding; and a transport stream (TS) interface which finally outputs a transport stream as a demodulated signal. In addition, the demodulator 112 is supported by the I2C controller for data exchange using the internal bus of the broadcast signal receiving apparatus 100 including the controller 180, and DiSEqC for data communication with the exterior such as the relay 200.

The broadcast signal receiving apparatus 100 according to an exemplary embodiment includes the LNB control block 112a in the demodulator 112 as shown in FIG. 10, and thus receives the channel information about the selected channel in the single demodulator 112, i.e., the I2C control signal including all the information about horizontal/vertical polarization and high/low bands, thereby generating the corresponding DiSEqC command and outputting it to the relay 200.

As compared with the case where the LNB IC (i.e. LNB processor) is separately provided to receive the I2C control signal including the information about the horizontal/vertical polarization, it is more easy to control timing between the change in the LNB voltage and the output of the DiSEqC command and thus transmit the command to the relay 200 while observing the set timing.

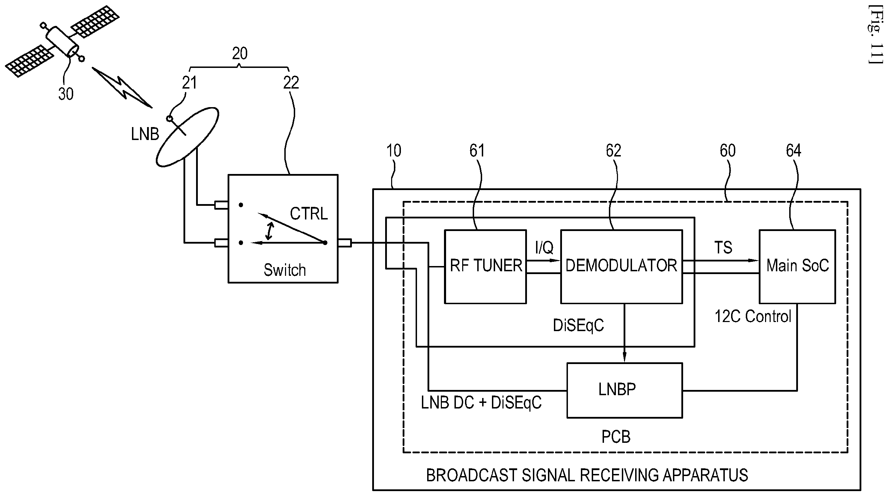

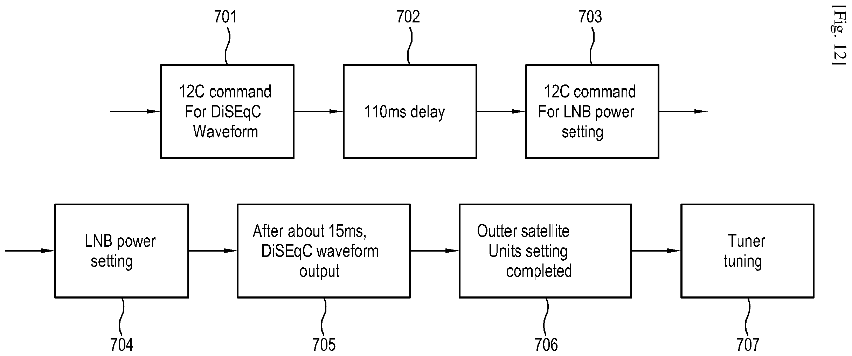

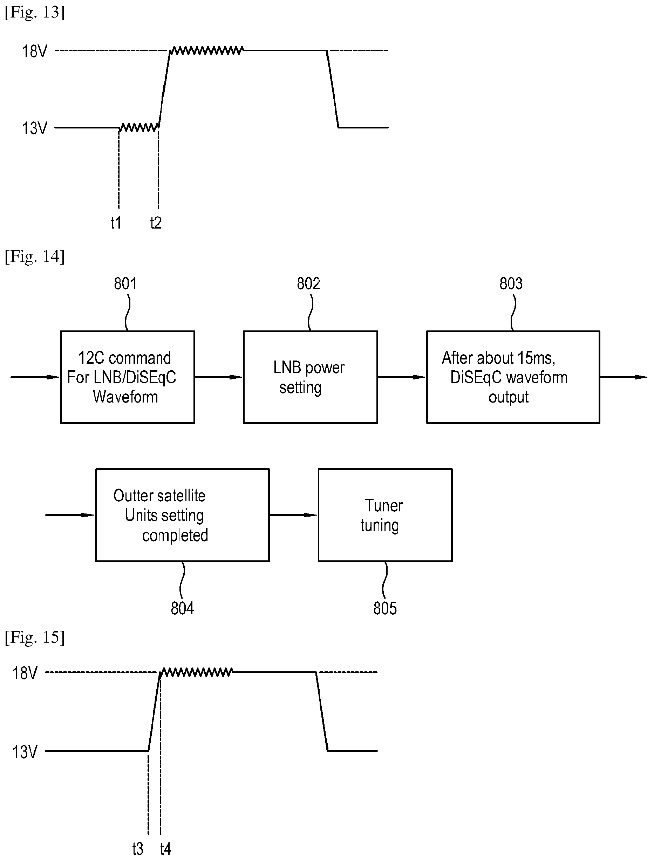

FIG. 11 illustrates a broadcast signal receiving apparatus 10 where an LNB IC is separately provided, FIG. 12 sequentially shows operations of outputting a control command from the broadcast signal receiving apparatus 10 of FIG. 11 to a relay 20, and FIG. 13 is a graph showing an example of the control command output by the operations of FIG. 12,

As shown in FIG. 11, the broadcast signal receiving apparatus 10 includes a tuner chip including an RF tuner 61 and a demodulator 62, and a LNB processor (hereinafter, referred to as an "LNBP") for adjusting a LNB voltage supplied to the relay 20, and a main SoC 64, which are mounted to a PCB 60 provided therein.

As shown in FIG. 12, a DiSEqC command having a waveform based on the DiSEqC protocol, i.e. an I2C command for the DiSeqC waveform, i.e. an I2C control signal is generated by the main SoC 64 and output to the demodulator 62 (701). Here, the I2C control signal may be generated by a user's channel selection by way of example.

After a delay of 110ms from the generation of the I2C command (702), the I2C command, i.e. the I2C control signal for setting LNB power is output from the main SoC 64 to the LNBP 63 (703). The LNBP 63 may set the LNB power to have a voltage level of 13V or 18V to correspond to the selected channel in response to the command (704).

When 15ms elapses after setting the LNB power, the DiSEqC command may be output from the demodulator 62 to the relay 20 through the LNBP 63 (705). Here, the output DiSEqC command is obtained by superimposing DiSEqC data including the channel information to the signal having the set LNB power level. For example, the output DiSEqC command is given in such a manner that the tone burst signal and the 22kHz tone signal are continuously output with a predetermined time gap therebetween.

The relay 20 receives the DiSEqC command output in the operation 705, and completes settings of the satellite 30, i.e. an outer satellite unit (706). That is, the H/V polarization switching is performed corresponding to the voltage level, and the low/ high band is selected in accordance with the selected channel.

In accordance with the corresponding settings, the broadcast signal is received in the broadcast signal receiving apparatus 10 via the relay 20, and the RF tuner 61 is turned to a selected channel to receive a broadcast signal 707.

Since the operations 704 and 705 in FIG. 12 are respectively performed by the LNBP 63 and the demodulator 62, the timing control is often abnormally implemented. For example, as shown in FIG. 13, an error may occur between timing t2 of setting the voltage level in the LNB 63 and timing t1 of outputting the DiSEqC command from the demodulator 62.

The relay 20 cannot recognize such a control command having the error. Therefore, the broadcast signal receiving apparatus 10 tries again the setting of the voltage and the output of the DiSEqC command as shown in FIG. 12. For this reason, time difference occurs between a user's channel selection and the receiving operation of the tuner 61, and therefore causes a tuning fail that no image is temporarily/intermittently displayed on the display or display of an image is delayed in the broadcast signal receiving apparatus 10, thereby giving inconvenience to a user.

FIG. 14 sequentially shows operations of outputting the control command to the relay 200 if the LNB control block 112a is included in the demodulator 112 according to an exemplary embodiment, and FIG. 15 is a graph showing an example of the command output by the operations of FIG. 14.

Referring to FIG. 14, in the broadcast signal receiving apparatus 100 according to an exemplary embodiment, both the I2C command for the DiSEqC command having a waveform based on the DiSEqC protocol and the I2C command for setting the LNB power are simultaneously generated by the main SoC 620 and output to the demodulator 112 (801). Here, the I2C control signal is generated in response to a user's channel selection by way of example.

The LNB control block 112a of the demodulator 112 can set the LNB power with a voltage level of 13V or 18V corresponding to the selected channel in response to the received command (802).

When 15ms elapses after setting the LNB power, the DiSEqC command is directly output from the demodulator 112 to the relay 200 (803). Here, the output DiSEqC command is obtained by superimposing DiSEqC data including the channel information to the signal having the set LNB power level. For example, the output DiSEqC command is given in such a manner that the tone burst signal and the 22kHz tone signal are continuously output with a predetermined time gap therebetween.

The relay 200 receives the DiSEqC command output in the operation 705, and completes settings of the satellite 300, i.e. outer satellite unit (804). That is, the H/V polarization switching is performed corresponding to the voltage level, and the low/ high band is selected corresponding to the selected channel.

In accordance with the settings, the broadcast signal is received in the broadcast signal receiving apparatus 100 via the relay 200, and the RF tuner 111 is tuned to a selected channel to receive a broadcast signal (805).

In FIG. 14, the operations 802 and 803 are performed by the demodulator 112, and therefore the timing control is properly performed to satisfy the standards. For example, as shown in FIG. 15, difference between timing t3 of setting the voltage level and timing t4 of outputting the DiSEqC command is within the standards of 15ms.

Below, a method of controlling the broadcast signal receiving apparatus 100 according to an exemplary embodiment will be described with reference to accompanying drawings

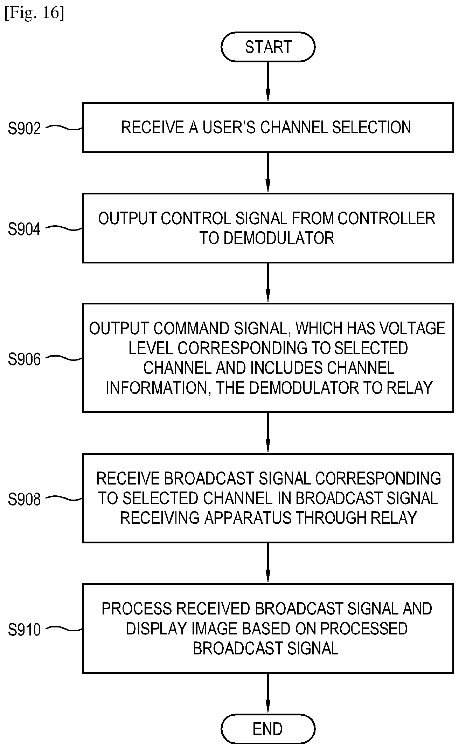

FIG. 16 is a flowchart showing a method of controlling the broadcast signal receiving apparatus according to an exemplary embodiment.

As shown in FIG. 16, the controller 180 receives a user's channel section through the user input interface 140 of the broadcast signal receiving apparatus 100 (S902). Here, a user's channel selection includes channel change.

The controller 180 outputs a control signal to the demodulator 112 in response to the channel section received in the operation S902 (S904). Here, the control signal output from the controller 180 to the demodulator 112 is an I2C control signal and includes a channel changing signal.

In response to the control signal output in the operation S902, a command signal having a voltage level, e.g. one of 13V and 18V corresponding to the selected channel and including the corresponding channel information is output from the demodulator 112 to the relay 200 (S906). In the operation S906, the demodulator 120 sets the voltage level with one of 13V and 18V, and the operation of setting the voltage level includes change from 13V to 18V or from 18V to 13V.

Based on the command signal output in the operation S906, the satellite broadcast signal corresponding to the channel selected in the operation S902 is received in the broadcast signal receiving apparatus 100 via the relay 200 (S908). Here, the switch box 220 of the relay 200 performs switching for selecting the broadcast signal of vertical polarization or horizontal polarization in accordance with the voltage level of the command signal, and the LNB 210 is controlled to selectively receive the broadcast signal of a high band or low band corresponding to a desired channel based on the channel information included in the command signal.

Further, the broadcast signal received in the operation S908 is processed by the tuner module 110 and the signal processor 120 and displayed as an image on the display 130 (S910).

According to the foregoing exemplary embodiments, the control block 112a for setting the voltage of the control signal transmitted corresponding to the channel selection is provided in the demodulator 112, and therefore both the control of the LNB voltage and the generation and output of the DiSEqC command are implemented in the single element, thereby accurately controlling the timing.

Therefore, it is possible to reduce the tuning fail due to the timing control performed in different elements, and thus more improved viewing circumstances/services are provided since a user's visual inconvenience and risk are decreased and stability of the selected channel is guaranteed.

Accordingly, it is advantageous for a manufacturer to decrease noise due to too complex and unnecessary circuits, and make the system small/simple since the size of the PCB is reduced.

By the way, the foregoing exemplary embodiments may be achieved by a computer-readable recording medium. The computer-readable recording medium includes a transmission medium and a storage medium for storing data readable by a computer system. The transmission medium may be achieved by a wired/wireless network where computer systems are connected to one another.

The foregoing exemplary embodiments may be achieved by hardware and combination of hardware and software. The hardware includes the controller 180, and the controller 170 includes a nonvolatile memory where the software, i.e. a computer program is stored; a random access memory (RAM) to which the computer program stored in the nonvolatile memory is loaded; and a central processing unit (CPU) for executing the computer program loaded to the RAM. The nonvolatile memory may include a hard disk drive, a flash memory, a read only memory (ROM), compact disc (CD)-ROMs, magnetic tapes, a floppy disk, an optical storage, a data transmission device using Internet, etc., but not limited thereto. The nonvolatile memory is just an example of the computer-readable recording medium in which a program readable by a computer is recorded.

The computer program is a code that can be read and executed by the CPU, and includes codes for enabling the controller 180 to perform operations including the operations S902 to S910 of FIG. 16.

The computer program may be involved in software including an operating system or applications provided in the broadcast signal receiving apparatus 100 and/or software interfacing with the external apparatus.

Although a few exemplary embodiments have been shown and described, it will be appreciated by those skilled in the art that changes may be made in these exemplary embodiments without departing from the principles of the invention, the scope of which is defined in the appended claims.

## Claims

1. A broadcast signal receiving apparatus (100) comprising:
a communicator (160) configured to communicate with a relay (200);
a demodulator (112) configured to demodulate a broadcast signal; and
at least one processor configured to:
control the demodulator (112) to generate a command which has a predetermined voltage level and includes channel information
corresponding to a channel which is selected by a user input from among a plurality of channels,
control the communicator (160) to transmit the generated command to the relay (200) to select a satellite (300) from among a plurality of satellites based on the voltage level indicated by the transmitted command, and
control the demodulator (112) to demodulate a broadcast signal of the selected channel of the selected satellite received from the relay (200).

2. The broadcast signal receiving apparatus according to claim 1, wherein the demodulator (112) changes the voltage level of the command in response to the control signal, and superimposes the channel information to the command having the changed voltage level.

3. The broadcast signal receiving apparatus according to claim 2, wherein the demodulator (112) superimposes the channel information to the command at timing when a predetermined time elapses after changing the voltage level of the command.

4. A broadcast signal receiving system (1) comprising the broadcast signal receiving apparatus (100) according to any one of the preceding claims and a relay (200), wherein the relay (200) comprises a switch box (220) configured to control selection of a satellite (301, 302, 303) corresponding to the selected channel based on the voltage level of the command.

5. The broadcast signal receiving system (1) according to claim 4, wherein
the relay (200) further comprises a low noise block (LNB) provided in a satellite antenna, and
the LNB (210) down-converts a broadcast signal of a predetermined band received from a satellite (301, 302, 303) to a usable frequency of the broadcast signal receiving apparatus (100) based on information about the selected channel included in the command.

6. The broadcast signal receiving system according to claim 5, wherein the command comprises a tone burst signal and tone signals sequentially output with time gaps from the tone burst signal based on a predetermined communication protocol, and is controlled to receive a broadcast signal having a frequency band corresponding to one of a low band and a high band in accordance with the tone signals.

7. The broadcast signal receiving system according to claim 4, wherein the switch box (220) comprises a channel router configured to have a plurality of ports connectable with a plurality of broadcast signal receiving apparatuses by a single cable, and receive the command from the plurality of broadcast signal receiving apparatuses.

8. The broadcast signal receiving apparatus according to any one of claims 1 to 3, wherein the demodulator (112) receives the control signal from the processor through an I2C interface, and the command comprises a digital satellite equipment control (DiSEqC) command based on a DiSEqC protocol.

9. A method of controlling a broadcast signal receiving apparatus for receiving a satellite broadcast signal, the method comprising:
communicating with a relay (200);
controlling a demodulator (112) to generate a command which has a predetermined voltage level and includes channel information corresponding to a channel which is selected by a user input from among a plurality of channels;
transmitting the generated command to the relay to select a satellite (300) from among a plurality of satellites based on the voltage level indicated by the transmitted command; and
controlling the demodulator (112) to demodulate a broadcast signal of the selected channel of the selected satellite received from the relay (200).

10. The method according to claim 9, wherein the outputting the command comprises:
changing the voltage level of the command in response to the control signal, and superimposing the channel information to the command having the changed voltage level.

11. The method according to claim 10, wherein the outputting the command comprises: superimposing the channel information to the command at timing when a predetermined time elapses after changing the voltage level of the command.

12. The method according to claim 9, further comprising: controlling selection of a satellite (301, 302, 303) corresponding to the channel selected by a switch box (220) of the relay (200), based on the voltage level of the command.

13. The method according to claim 12, further comprising: by a low noise block (LNB) (210) of the relay (200), down-converting a broadcast signal of a predetermined band received from a satellite (300) to a usable frequency of the broadcast signal receiving apparatus (100) based on information about the selected channel included in the command.

14. The method according to claim 13, wherein the command comprises a tone burst signal and tone signals sequentially output with time gaps from the tone burst signal based on a predetermined communication protocol, and
the method further comprises: by the LNB (210), receiving a broadcast signal having a frequency band corresponding to one of a low band and a high band in accordance with the tone signals.

15. The method according to any one of claims 9 to 14, wherein the outputting the control signal, the demodulator (112) receives the control signal from the processor through an I2C interface, and the command comprises a digital satellite equipment control (DiSEqC) command based on a DiSEqC protocol.

## Patentansprüche

1. Rundfunksignal-Empfangsvorrichtung (100), die Folgendes aufweist:
einen Kommunikator (160), der zum Kommunizieren mit einem Relais (200) konfiguriert ist;
einen Demodulator (112), der zum Demodulieren eines Rundfunksignals konfiguriert ist; und
wenigstens einen Prozessor, der konfiguriert ist zum:
Steuern des Demodulators (112) zum Generieren eines Befehls, der einen vorbestimmten Spannungspegel hat und Kanalinformationen beinhaltet, die einem Kanal entsprechen, der durch eine Benutzereingabe unter mehreren Kanälen ausgewählt wird,
Steuern des Kommunikators (160) zum Übertragen des generierten Befehls zu dem Relais (200), um einen Satelliten (300) unter mehreren Satelliten auf Basis des Spannungspegels auszuwählen, der durch den übertragenen Befehl angezeigt wird, und
Steuern des Demodulators (112) zum Demodulieren eines Rundfunksignals des ausgewählten Kanals des ausgewählten Satelliten, das von dem Relais (200) empfangen wird.

2. Rundfunksignal-Empfangsvorrichtung nach Anspruch 1, wobei der Demodulator (112) den Spannungspegel des Befehls als Reaktion auf das Steuersignal ändert und die Kanalinformationen dem Befehl, der den geänderten Spannungspegel hat, überlagert.

3. Rundfunksignal-Empfangsvorrichtung nach Anspruch 2, wobei der Demodulator (112) die Kanalinformationen dem Befehl bei Zeitsteuerung überlagert, wenn eine vorbestimmte Zeit nach Ändern des Spannungspegels des Befehls verstreicht.

4. Rundfunksignal-Empfangssystem (1), das die Rundfunksignal-Empfangsvorrichtung (100) nach einem der vorhergehenden Ansprüche und ein Relais (200) aufweist, wobei das Relais (200) einen Schaltkasten (220) aufweist, der zum Steuern der Auswahl eines Satelliten (301, 302, 303), der dem ausgewählten Kanal entspricht, auf Basis des Spannungspegels des Befehls konfiguriert ist.

5. Rundfunksignal-Empfangssystem (1) nach Anspruch 4, wobei
das Relais (200) ferner einen in einer Satellitenantenne bereitgestellten rauscharmen Signalumsetzer (Low Noise Block, LNB) aufweist und
der LNB (210) ein von einem Satelliten (301, 302, 303) empfangenes Rundfunksignal eines vorbestimmten Bandes auf eine nutzbare Frequenz der Rundfunksignal-Empfangsvorrichtung (100) auf Basis von in dem Befehl enthaltenen Informationen über den ausgewählten Kanal herunter umsetzt.

6. Rundfunksignal-Empfangssystem nach Anspruch 5, wobei der Befehl ein Ton-Burst-Signal und Tonsignale, die sequenziell mit Zeitabständen von dem Ton-Burst-Signal auf Basis eines vorbestimmten Kommunikationsprotokolls ausgegeben werden, aufweist und zum Empfangen eines Rundfunksignals, das ein Frequenzband hat, das einem von einem niedrigen Band und einem hohen Band entspricht, gemäß den Tonsignalen gesteuert wird.

7. Rundfunksignal-Empfangssystem nach Anspruch 4, wobei der Schaltkasten (220) einen Kanalrouter aufweist, der so konfiguriert ist, dass er mehrere Ports hat, die durch ein einzelnes Kabel mit mehreren Rundfunksignal-Empfangsvorrichtungen verbindbar sind, und den Befehl von den mehreren Rundfunksignal-Empfangsvorrichtungen empfängt.

8. Rundfunksignal-Empfangsvorrichtung nach einem der Ansprüche 1 bis 3, wobei der Demodulator (112) das Steuersignal von dem Prozessor durch eine I2C-Schnittstelle empfängt und der Befehl einen Digital Satellite Equipment Control- (DiSEqC) -Befehl auf Basis eines DiSEqC-Protokolls aufweist.

9. Verfahren zum Steuern einer Rundfunksignal-Empfangsvorrichtung zum Empfangen eines Satelliten-Rundfunksignals, wobei das Verfahren Folgendes aufweist:
Kommunizieren mit einem Relais (200);
Steuern eines Demodulators (112) zum Generieren eines Befehls, der einen vorbestimmten Spannungspegel hat und Kanalinformationen beinhaltet, die einem Kanal entsprechen, der durch eine Benutzereingabe unter mehreren Kanälen ausgewählt wird;
Übertragen des generierten Befehls zu dem Relais, um einen Satelliten (300) unter mehreren Satelliten auf Basis des Spannungspegels auszuwählen, der durch den übertragenen Befehl angezeigt wird; und
Steuern des Demodulators (112) zum Demodulieren eines Rundfunksignals des ausgewählten Kanals des ausgewählten Satelliten, das von dem Relais (200) empfangen wird.

10. Verfahren nach Anspruch 9, wobei das Ausgeben des Befehls Folgendes aufweist:
Ändern des Spannungspegels des Befehls als Reaktion auf das Steuersignal und
Überlagern der Kanalinformationen dem Befehl, der den geänderten Spannungspegel hat.

11. Verfahren nach Anspruch 10, wobei das Ausgeben des Befehls Folgendes aufweist: Überlagern der Kanalinformationen dem Befehl bei Zeitsteuerung, wenn eine vorbestimmte Zeit nach Ändern des Spannungspegels des Befehls verstreicht.

12. Verfahren nach Anspruch 9, das ferner Folgendes aufweist: Steuern einer Auswahl eines Satelliten (301, 302, 303), der dem von einem Schaltkasten (220) des Relais (200) ausgewählten Kanal entspricht, auf Basis des Spannungspegels des Befehls.

13. Verfahren nach Anspruch 12, das ferner Folgendes aufweist: Umsetzen eines von einem Satelliten (300) empfangenen Rundfunksignals eines vorbestimmten Bands durch einen rauscharmen Signalumsetzer (Low Noise Block, LNB) (210) des Relais (200) herunter auf eine nutzbare Frequenz der Rundfunksignal-Empfangsvorrichtung (100) auf Basis von in dem Befehl enthaltenen Informationen über den ausgewählten Kanal.

14. Verfahren nach Anspruch 13, wobei der Befehl ein Ton-Burst-Signal und Tonsignale aufweist, die sequenziell mit Zeitabständen von dem Ton-Burst-Signal auf Basis eines vorbestimmten Kommunikationsprotokolls ausgegeben werden, und
das Verfahren ferner Folgendes aufweist: Empfangen eines Rundfunksignals, das ein Frequenzband hat, das einem von einem niedrigen Band und einem hohen Band entspricht, gemäß den Tonsignalen durch den LNB (210).

15. Verfahren nach einem der Ansprüche 9 bis 14, wobei das Ausgeben des Steuersignals, der Demodulator (112) das Steuersignal von dem Prozessor durch eine I2C-Schnittstelle empfängt und der Befehl einen Digital Satellite Equipment Control- (DiSEqC) -Befehl auf Basis eines DiSEqC-Protokolls aufweist.

## Revendications

1. Appareil de réception de signaux de diffusion (100) comprenant :
un communicateur (160) configuré pour communiquer avec un relais (200) ;
un démodulateur (112) configuré pour démoduler un signal de diffusion ; et
au moins un processeur configuré pour :
contrôler le démodulateur (112) pour générer une commande qui a un niveau de tension prédéterminé et qui inclut une information de canal qui correspond à un canal qui est sélectionné par une entrée d'utilisateur parmi une pluralité de canaux,
contrôler le communicateur (160) pour transmettre la commande générée au relais (200) pour sélectionner un satellite (300) parmi une pluralité de satellites sur la base du niveau de tension indiqué par la commande transmise, et
contrôler le démodulateur (112) pour démoduler un signal de diffusion du canal sélectionné du satellite sélectionné, reçu en provenance du relais (200).

2. Appareil de réception de signaux de diffusion selon la revendication 1, dans lequel le démodulateur (112) change le niveau de tension de la commande en réponse au signal de contrôle et superpose l'information de canal à la commande dont le niveau de tension a été changé.

3. Appareil de réception de signaux de diffusion selon la revendication 2, dans lequel le démodulateur (112) superpose l'information de canal à la commande à un moment où un temps prédéterminé s'écoule après le changement du niveau de tension de la commande.

4. Système de réception de signaux de diffusion (1) comprenant l'appareil de réception de signaux de diffusion (100) selon l'une quelconque des revendications précédentes et un relais (200), le relais (200) comprenant un boîtier de commutation (220) configuré pour contrôler la sélection d'un satellite (301, 302, 303) qui correspond au canal sélectionné sur la base du niveau de tension de la commande.

5. Système de réception de signaux de diffusion (1) selon la revendication 4, dans lequel
le relais (200) comprend en outre un bloc d'alimentation à bruit réduit (LNB) situé dans une antenne satellite, et
le LNB (210) convertit vers le bas un signal de diffusion d'une bande prédéterminée, reçu en provenance d'un satellite (301, 302, 303), à une fréquence utilisable de l'appareil de réception de signaux de diffusion (100) sur la base d'une information concernant le canal sélectionné, incluse dans la commande.

6. Système de réception de signaux de diffusion selon la revendication 5, dans lequel la commande comprend un signal d'impulsion sonore et des signaux sonores produits séquentiellement avec des intervalles de temps à partir du signal d'impulsion sonore sur la base d'un protocole de communication prédéterminé, et est contrôlée pour recevoir un signal de diffusion qui a une bande de fréquences qui correspond à une bande basse ou à une bande haute selon les signaux sonores.

7. Système de réception de signaux de diffusion selon la revendication 4, dans lequel le boîtier de commutation (220) comprend un routeur de canaux configuré pour avoir une pluralité de ports connectables à une pluralité d'appareils de réception de signaux de diffusion par un unique câble et recevoir la commande en provenance de la pluralité d'appareils de réception de signaux de diffusion.

8. Appareil de réception de signaux de diffusion selon l'une quelconque des revendications 1 à 3, dans lequel le démodulateur (112) reçoit le signal de contrôle en provenance du processeur par l'intermédiaire d'une interface I2C, et la commande comprend une commande de contrôle d'équipement satellite numérique (DiSEqC) basée sur un protocole DiSEqC.

9. Procédé de contrôle d'un appareil de réception de signaux de diffusion pour recevoir un signal de diffusion satellite, le procédé consistant à :
communiquer avec un relais (200) ;
contrôler un démodulateur (112) pour générer une commande qui a un niveau de tension prédéterminé et qui inclut une information de canal qui correspond à un canal qui est sélectionné par une entrée d'utilisateur parmi une pluralité de canaux ;
transmettre la commande générée au relais pour sélectionner un satellite (300) parmi une pluralité de satellites sur la base du niveau de tension indiqué par la commande transmise ; et
contrôler le démodulateur (112) pour démoduler un signal de diffusion du canal sélectionné du satellite sélectionné, reçu en provenance du relais (200).

10. Procédé selon la revendication 9, dans lequel la production de la commande consiste à :
changer le niveau de tension de la commande en réponse au signal de contrôle, et
superposer l'information de canal à la commande dont le niveau de tension a été changé.

11. Procédé selon la revendication 10, dans lequel la production de la commande consiste à : superposer l'information de canal à la commande à un moment où un temps prédéterminé s'écoule après le changement du niveau de tension de la commande.

12. Procédé selon la revendication 9, consistant en outre à : contrôler la sélection d'un satellite (301, 302, 303) qui correspond au canal sélectionné par un boîtier de commutation (220) du relais (200) sur la base du niveau de tension de la commande.

13. Procédé selon la revendication 12, consistant en outre à : par un bloc d'alimentation à bruit réduit (LNB) (210) du relais (200), convertir vers le bas un signal de diffusion d'une bande prédéterminée, reçu en provenance d'un satellite (300), à une fréquence utilisable de l'appareil de réception de signaux de diffusion (100) sur la base d'une information concernant le canal sélectionné, incluse dans la commande.

14. Procédé selon la revendication 13, dans lequel la commande comprend un signal d'impulsion sonore et des signaux sonores produits séquentiellement avec des intervalles de temps à partir du signal d'impulsion sonore sur la base d'un protocole de communication prédéterminé, et
le procédé consistant en outre à : par le LNB (210), recevoir un signal de diffusion qui a une bande de fréquences qui correspond à une bande basse ou à une bande haute selon les signaux sonores.

15. Procédé selon l'une quelconque des revendications 9 à 14, dans lequel la production du signal de contrôle, le démodulateur (112) reçoit le signal de contrôle en provenance du processeur par l'intermédiaire d'une interface I2C, et la commande comprend une commande de contrôle d'équipement satellite numérique (DiSEqC) basée sur un protocole DiSEqC.
